# EUROPEAN PATENT SPECIFICATION

(11) **EP 3 225 840 B1**
(45) Date of publication and mention of the grant of the patent: **04.05.2022**
(21) Application number: 15862426.2
(22) Date of filing: 04.11.2015
(51) Int. Cl.: F03D 13/25, B63B 35/44, E02B 17/00, E02D 27/42, F03D 13/20

(54) **TRANSITION ELEMENT FOR THE TRANSMISSION OF FORCES BETWEEN A TOWER AND A SUB-STRUCTURE ON A FLOATING MONOLITHIC CONCRETE STRUCTURE FOR SUPPORTING MARINE WIND TURBINES**
ÜBERGANGSELEMENT ZUR ÜBERTRAGUNG VON KRÄFTEN ZWISCHEN EINEM TURM UND EINER UNTERKONSTRUKTION AUF EINER SCHWIMMENDEN MONOLITHISCHEN BETONKONSTRUKTION ZUR UNTERSTÜTZUNG VON MEERESWINDTURBINEN
ÉLÉMENT DE TRANSITION POUR LA TRANSMISSION DE FORCES ENTRE UNE TOUR ET UNE SOUS-STRUCTURE DANS UNE STRUCTURE FLOTTANTE MONOLITHIQUE DE BÉTON POUR LE SUPPORT DE TURBINES ÉOLIENNES MARINES

(30) Priority: 27.11.2014 ES 201431765
(43) Date of publication of application: 04.10.2017
(73) Proprietor: Universitat Politècnica De Catalunya, 08034 Barcelona (ES)
(72) Inventor: MOLINS BORRELL, Climent, E-08034 Barcelona (ES); CAMPOS HORTIGÜELA, Alexis, 25150 Artesa de Lleida (ES)
(74) Representative: Juncosa Miró, Jaime
(86) International application number: PCT/ES2015/070789
(87) International publication number: WO 2016/083636

(56) References cited:
- EP-A1- 2 072 685
- EP-A1- 2 597 227
- WO-A1-2014/095252
- WO-A2-2010/143976
- WO-A2-2013/153395
- DE-U1-202007 009 474
- US-A1- 2013 224 020
- US-A1- 2014 079 548

## Description

The present invention relates to floating structures for supporting wind turbines comprising a float, a tower and a transition element, wherein the transition element is made of reinforced concrete and is located between the tower, of a lesser diameter, and the concrete float, of a greater diameter, whether the tower is made of metal or concrete. The transition element comprises a pre-stressed concrete layer of revolution having an optimum geometry for the correct transmission of strains between the two parts, the tower and the float, with a reduced thickness and without the need for external rigidifying and reinforcing elements on the surfaces thereof, which would increase the weight and the cost of the floating structure.

### Background of the Invention

Ever since the implementation of the earliest offshore wind farms, industry has leaned more towards the use of concrete elements for supporting the towers that hold up the wind turbines as a result of the best performance of said material in the marine environment.

Document DE 202007009474 U1 discloses an offshore platform comprising a foundation pile anchored to the seabed, a transition element and a structural connection structure formed on the transition element to connect to a tower. The foundation pile is made of a steel pipe and the transition element is designed as a reinforced concrete structure with prestressed reinforcement. An upper section of the steel pipe is inserted into a tubular lower section of the transition element, and a space between the transition element and the steel pipe is grouted with a special mineral mass.

The transition between steel and concrete in these structures has a critical zone in connection with the durability of the structure, primarily due to fatigue in the concrete in the area where they are joined together.

The new design minimizes the concentrations of strains along the transition, assuring maximum service life due to both durability and fatigue, as it is a continuous, joint-free part connecting the tower with the sub-structure.

Following the teachings disclosed in WO2013/093160A1, which describes a one-piece floating monolithic reinforced and pre-stressed concrete structure, including tower and float, in a single element, the present invention proposes a transition geometry that allows transmitting strains generated at the base of the wind turbine tower to the floating element, of a greater diameter, without the need for stiffeners or other external elements on the actual concrete wall of the structure, which would increase weight and, therefore, cause a loss of buoyancy.

In the design of floating structures, the geometry of the section intersecting with mean sea level (msl) is a key factor for the correct hydrodynamic behavior of the structure, such that the diameter in said section is the least capable of withstanding design strains.

In contrast, the design of the float is focused on maximizing stability of the structure with the lowest possible depth, involving larger diameters than in the tower. This difference between diameters involves great concentrations of stress on the base of the tower and on the float, particularly in the case of transitions having a small length, or even transitions having nil length, wherein a key factor is the ratio between the diameters of the tower and the float.

In the case of monolithic concrete structures, wherein the tower and float form a single part and the prestressing strains of the concrete generate considerable deflection strains in the geometry changes, achieving a geometry which allows uniformly distributing stresses over the structure allows increasing durability of the structure as well as reducing the cost of making floating monolithic concrete structures.

The present invention is also valid in those cases comprising a tower made of metal in which the steel-concrete joint must be kept as far away as possible from the surface of the water for the sake of durability and tightness, allowing to perform the transition with concrete up to just a few meters above msl, where it connects with the tower. This solution minimizes durability and maintenance issues of the zone that is most exposed to the most aggressive environmental vectors.

In the case of concrete structures anchored to the sea bed by gravity, the distribution of stresses by increasing the diameter from the tower to the foundation are optimized.

### Description of the Invention

The invention is set out in the appended set of claims.

According to the present invention, a floating structure for supporting a marine wind-driven power generator is provided, according to the wording of independent claim 1.

The transition element comprises a prestressed concrete revolution layer having an axisymmetric circular transition geometry from a radius of the float to a radius of a base of the tower, with a curved or segmented vertical cross section.

The float is made of hollow concrete. A meeting point of the float and the transition element is circumferentially pre-stressed by a set of circumferential tendons clustered in a zone where a change of geometry is located, and other reinforcing circumferential tendons are distributed throughout the transition element. Longitudinal tendons are provided from the base of the tower to the float through the transition element.

The pre-stressed concrete revolution layer has a thickness comprised between a thickness of the tower and a thickness of the sub-structure, dispensing with reinforcements or stiffeners on outer surfaces thereof.

With the transition element, and by means of using a suitable geometry and steel tendons for longitudinal and circumferential prestressing, a smooth transmission of the strains generated in the tower to the float is achieved. It additionally helps improve other hydrodynamic aspects with respect to other solutions, as will be seen below.

Said transition may comprise:
- an arc of circumference tangent to the generatrix of the tower joining both parts together, forming a toroid-shaped transition.

Should it be needed, the transition can be done in two or more frustoconical segments by adapting the transitions to the original curvature. This option involves higher concentrations of stresses, which can in turn be absorbed by means of the concentrated circumferential prestressing in each transition change.

By adopting this geometry, which is either torus-shaped or based on cone frustums, suitable distribution of the longitudinal and transverse stresses on the concrete is obtained, including the loads of the tower plus those loads due to the prestressing of the tendons embedded in the concrete, whether they are longitudinal or transverse.

The meeting point of the float and the transition element is circumferentially pre-stressed to absorb the stresses generated by the change in geometry, by providing a set of tendons clustered in the zone where the change is located, and other reinforcing tendons distributed throughout the transition to assure a full state of compression.

This state of compression assures durability of the floating structure throughout the entire underwater body and splash zone.

The longitudinal tendons correspond to the existing prestressing tendons at the base of the tower, providing them with continuity to the float through the transition. In the case of towers made of metal, the longitudinal tendons start from the beginning of the concrete structure above the msl.

In addition to the structural advantage, it must be observed that the transition increases the radius in a non-linear manner such that it allows moving larger diameters away from the surface of the sea, where the effects of the waves are maximal and decrease exponentially with depth, while they proportionally increase with diameter. This greatly improves the hydrodynamic response of the floating structure, being more permeable on the surface of the sea.

The transition shape also helps to prevent possible adverse effects in movement under severe wave conditions, where a significant part of the transition is temporarily exposed, causing significant variations to hydrostatic rigidity with the use of typical linear transitions, which must be compensated for in the design by means of the length of the transition, increasing the depth and/or radius of the float.

Furthermore, the smooth transition at the tower base allows for a greater radius around the tower with minimal depth than by means of other types transitions, which favors the passage of ships.

In one embodiment, the tower is made of reinforced concrete and forms a monolithic body together with the transition element and the float, the longitudinal tendons provide continuity to longitudinal tendons (11) coming from the tower, and the tower is made of metal.

### Brief Description of the Drawings

To better understand the preceding description a set of drawings are attached hereto in which the object of the invention is depicted by way of non-limiting example.

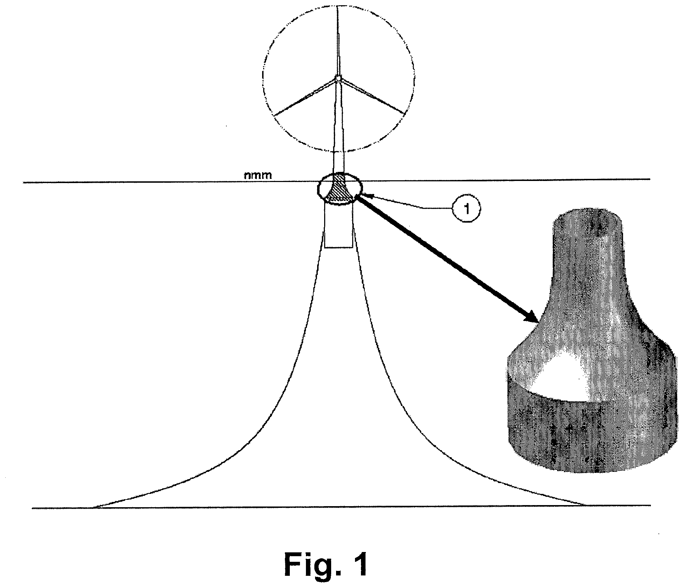

Figure 1 is a schematic elevational view of a floating structure for supporting marine wind turbines according to an embodiment of the present invention, where the floating structure comprising a float, a tower and a transition element between the float and the tower where the location of the transition element is highlighted;

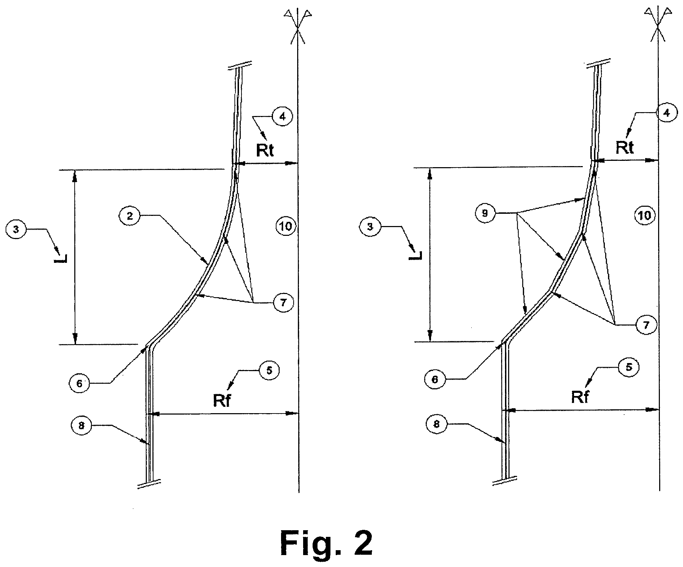

Figure 2 is an elevational section view of the transition element, showing the either curved geometry (2) or segmented geometry (9) of the transition element defining the transition length L (3) depending on the radii of the tower (4) and the float (5). Longitudinal steel prestressing tendons (8), as well as the main circumferential tendons (6) handling the strains existing due to the change in geometry, can be seen. The circumferential reinforcement tendons (7) distributed along the transition are also shown. Furthermore, it can be seen that the inner space is completely free of stiffening and/or reinforcing elements (10).

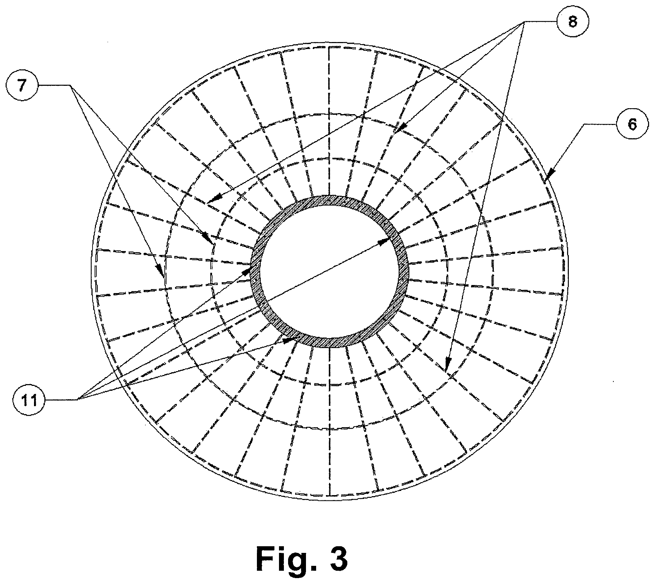

Figure 3 shows a plan view of the transition, wherein the geometry of the circumferential prestressing tendons (7 and 6) and of the longitudinal tendons (8) providing continuity to longitudinal tendons (11) coming from the tower can be clearly seen.

## Claims

1. A floating structure for supporting a marine wind-driven power generator, the floating structure comprising a float, a tower and a concrete transition element located between the float and the tower, wherein
- the transition element comprises a pre-stressed concrete layer having a radius reducing from a radius of the float (5) to a radius of a base of the tower (4),
- the float (5) is a hollow concrete float (5);
- reinforcing longitudinal tendons (8) are provided from the base of the tower (4) to the float (5) through the transition element dispensing with reinforcements or stiffeners on the outer surfaces thereof;
- reinforcing circumferential tendons are distributed along the transition element;
- said pre-stressed concrete layer has a thickness which is between a thickness of the tower and a thickness of the float (5), wherein
- the pre-stressed concrete layer of the transition element has a shape defined as a revolution of an axisymmetric circular transition geometry (2), with a curved or segmented vertical cross section, transitioning from a radius of the base of the tower to a radius of the float; and
- the transition element has a radius which increases in a non-linear manner from the radius of the base of the tower (4) to the radius of the float (5), the transition element having the larger diameter submerged, away from the surface of the sea, improving the hydrodynamic response of the floating structure.

2. The floating structure according to claim 1, wherein the segmented vertical cross section of the transition element comprises two or more straight segments (9) providing two or more frustoconical segments in the prestressed concrete revolution layer.

3. 4- The floating structure according to claim 1, wherein a meeting point of the float and the transition element is circumferentially pre-stressed by a set of circumferential tendons (6) clustered in a zone where a change in geometry is located, and other reinforcing circumferential tendons (7) are distributed throughout the transition element to assure a full state of compression.

4. The floating structure according to any one of claims 1-3, wherein the tower is made of reinforced concrete.

5. The floating structure according to claim 4, wherein the longitudinal tendons (8) provide continuity to longitudinal tendons (11) coming from the tower.

6. The floating structure according to any one of claims 1-3, wherein the tower is made of metal.

7. The floating structure according to claim 6, wherein the transition element and the float forms a monolithic concrete structure where the longitudinal tendons start from the beginning of the monolithic concrete structure above the mean sea level.

## Patentansprüche

1. Schwimmende Konstruktion zur Unterstützung von einem windgetriebenen Meeresstromgenerator, wobei die schwimmende Konstruktion einen Schwimmer, einen Turm und ein Betonübergangselement, welches sich zwischen dem Schwimmer und dem Turm befindet, umfasst, wobei
- das Übergangselement eine vorgespannte Betonschicht umfasst, welche einen Radius aufweist, welcher sich von einem Radius des Schwimmers (5) zu einem Radius einer Basis des Turms (4) verringert,
- der Schwimmer (5) ein hohler Betonschwimmer (5) ist;
- verstärkende längliche Spannglieder (8) von der Basis des Turms (4) zum Schwimmer (5) durch das Übergangselement vorgesehen sind, unter Verzicht auf Verstärkungen oder Versteifungselemente auf den Außenflächen derselben;
- verstärkende umlaufende Spannglieder entlang des Übergangselements verteilt sind;
- die genannte vorgespannte Betonschicht eine Dicke aufweist, welche zwischen einer Dicke des Turms und einer Dicke des Schwimmers (5) liegt, wobei
- die vorgespannte Betonschicht des Übergangselements eine Form aufweist, welche als Umdrehung einer axialsymmetrischen kreisförmigen Übergangsgeometrie (2), mit einem gekrümmten oder segmentierten vertikalen Querschnitt, welcher von einem Radius der Basis des Turms zu einem Radius des Schwimmers übergeht, definiert wird; und
- das Übergangselement einen Radius aufweist, welcher sich auf nicht lineare Weise vom Radius der Basis des Turms (4) zum Radius des Schwimmers (5) erhöht, wobei das Übergangselement den größeren Durchmesser eingetaucht, von der Meeresoberfläche entfernt, aufweist, sodass die hydrodynamische Reaktion der schwimmenden Konstruktion verbessert wird.

2. Schwimmende Konstruktion nach Anspruch 1, wobei der segmentierte vertikale Querschnitt des Übergangselements zwei oder mehr gerade Segmente (9) umfasst, unter Bereitstellung von zwei oder mehr kegelstumpfförmigen Segmenten in der vorgespannten Umdrehungsschicht aus Beton.

3. Schwimmende Konstruktion nach Anspruch 1, wobei ein Treffpunkt des Schwimmers und des Übergangselements von einem Satz von umlaufenden Spanngliedern (6) umlaufend vorgespannt ist, welche in einer Zone, in welcher sich eine Änderung der Geometrie befindet, gebündelt sind, und andere verstärkende umlaufende Spannglieder (7) über das gesamte Übergangselement verteilt sind, um einen vollen Kompressionszustand zu gewährleisten.

4. Schwimmende Konstruktion nach einem der Ansprüche 1-3, wobei der Turm aus armiertem Beton hergestellt ist.

5. Schwimmende Konstruktion nach Anspruch 4, wobei die länglichen Spannglieder (8) Kontinuität für die länglichen Spannglieder (11), welche vom Turm kommen, bereitstellen.

6. Schwimmende Konstruktion nach einem der Ansprüche 1-3, wobei der Turm aus Metall hergestellt ist.

7. Schwimmende Konstruktion nach Anspruch 6, wobei das Übergangselement und der Schwimmer eine monolithische Betonkonstruktion bilden, wobei die länglichen Spannglieder vom Anfang der monolithischen Betonkonstruktion über dem mittleren Meeresspiegel beginnen.

## Revendications

1. Une structure flottante pour supporter un générateur marin d'énergie éolienne, la structure flottante comportant un flotteur, une tour et un élément de transition en béton situé entre le flotteur et la tour, où
- l'élément de transition comporte une couche de béton précontraint ayant un rayon se réduisant depuis un rayon du flotteur (5) jusqu'à un rayon d'une base de la tour (4).
- le flotteur (5) est un flotteur en béton creux (5) ;
- des câbles longitudinaux de renforcement (8) sont prévus depuis la base de la tour (4) jusqu'au flotteur (5) par le biais de l'élément de transition offrant des renforcements ou des raidisseurs sur sa surface extérieure ;
- des câbles circonférentiels de renforcement sont distribués le long de l'élément de transition ;
- cette couche de béton précontraint a une épaisseur située entre une épaisseur de la tour et une épaisseur du flotteur (5) où
- la couche de béton précontraint de l'élément de transition a une forme définie comme une révolution d'une géométrie de transition circulaire axisymétrique (2), ayant une coupe transversale verticale courbe ou segmentée, faisant la transition d'un rayon de la base de la tour à un rayon du flotteur ; et
- l'élément de transition possède un rayon qui s'accroît de façon non linéaire depuis le rayon de la base de la tour (4) jusqu'au rayon du flotteur (5), l'élément de transition ayant le diamètre plus grand submergé, éloigné de la surface de la mer, améliorant la réponse hydrodynamique de la structure flottante.

2. La structure flottante conformément à la revendication 1, où la coupe transversale verticale segmentée de l'élément de transition comporte deux ou plusieurs éléments droits (9) offrant deux ou plusieurs segments tronconiques dans la couche de révolution de béton précontraint.

3. La structure flottante conformément à la revendication 1, où le point de rencontre du flotteur et l'élément de transition est circonférentiellement précontraint par un ensemble de câbles circonférentiels (6) regroupés dans une région où se trouve un changement de géométrie et d'autres câbles de renforcement circonférentiels (7) sont distribués partout dans l'élément de transition pour assurer un état de compression complet.

4. La structure flottante conformément à une quelconque des revendications 1-3, où la tour est faite en béton armé.

5. La structure flottante conformément à la revendication 4, où les câbles longitudinaux (8) offrent une continuité aux câble longitudinaux (11) provenant de la tour.

6. La structure flottante conformément à une quelconque des revendications 1-3, où la tour est faite en métal.

7. La structure flottante conformément à la revendication 6, où l'élément de transition et le flotteur forment une structure de béton monolithique où les câbles longitudinaux partent du commencement de la structure de béton monolithique au-dessus du niveau moyen de la mer.
